# EUROPEAN PATENT APPLICATION

(11) **EP 1 564 419 A2**
(43) Date of publication of application: **17.08.2005**
(21) Application number: 05075219.5
(22) Date of filing: 28.01.2005
(51) Int. Cl.: F16B 7/18, F16B 7/02

(54) **Fastening means, method and system for fastening a rod or tube**

(30) Priority: 13.02.2004 NL 1025491
(71) Applicant: Dondorff, Willem Lodewijk, 9411 BP Beilen (NL); Jorna, Sjouke Willem, 8862 WN Harlingen (NL)
(72) Inventor: Dondorff, Willem Lodewijk, 9411 BP Beilen (NL); Jorna, Sjouke Willem, 8862 WN Harlingen (NL)

(57) **Abstract**

The invention relates to a fastening means for fastening a rod (11) to an object (10). The fastening means comprise a conically shaped bush (1) with a narrow end and/or a wide end which is provided with an external thread (2) and with a slot (3) extending in a longitudinal direction. The conically shaped bush (1) is placed inside a conically shaped opening (12) in the object (10) and the rod (11) is placed inside the conically shaped bush (1), after which the conically shaped bush (1) is screwed into the conically shaped opening (12).

## Description

The invention relates to a fastening means for fastening a rod or tube onto an object, comprising a conically shaped bush with a wide end and a narrow end, which may be placed inside a conically shaped aperture in the object and in which the rod or tube may be inserted. Fastening means of this type are well known. Usually, a wide end of the conically shaped opening is provided with an internal thread, into which a cylindrically shaped bush with a corresponding external thread can be screwed, which pushes a conically shaped bush made of a flexible material into the conically shaped opening, as a result of which the rod or tube is clamped. For a fastening means of this kind, at least two parts are needed. Usually, a washer is placed between the conically shaped bush and the cylindrically shaped bush, in order to prevent the rotational movement of the cylindrically shaped bush from being transferred to the conically shaped bush. The fastening means according to the invention on the other hand consists of only one part and is characterised in that the conically shaped bush is provided with an external thread on its narrow end and/or its wide end. An important additional advantage is that the inventive fastening means may easily be released, by using the thread for breaking up the conical connection. Onto possible protruding parts of the external thread, a cap may be screwed if desired in order to obtain a tidy and dustproof finishing of the fastening means.

A favourable embodiment which makes few demands on the elasticity of the conically shaped bush which nevertheless results in a fastening means which may be fastened with little effort is characterised in that the conically shaped bush is provided with a slot, extending in a longitudinal direction.

A further favourable embodiment in which the fastening may be realised with even less effort is characterised in that the slot traverses the entire thickness of the conically shaped bush. In this embodiment, substantially no stipulation is made as to the elasticity of the material of which the conically shaped bush is manufactured. The fastening means may be made of steel for example and may be used for fastening a cylindrically grinded steel rod or tube with an unprecedented precision and reproducibility.

A further favourable embodiment is characterised in that the wide end and/or the narrow end of the conically shaped bush is provided with two mutually parallel flat surfaces, extending parallel to a main axis of the conically shaped bush. The distance between the flat surfaces is thereby preferably chosen such that an existing spanner may be used for screwing the conically shaped bus into the object.

A favourable alternative embodiment is characterised in that the wide end and/or the narrow end of the conically shaped bush is provided with two mutually parallel holes, extending parallel to a main axis of the conically shaped bush. With the aid of a key, provided with at least two pins which may cooperate which these holes, the conically shaped bush may be screwed into the object.

A further favourable embodiment is characterised in that the wide end and/or the narrow end of the conically shaped bush is provided with a milled edge, with the aid of which the conically shaped bush may be screwed manually into the conically shaped opening.

The invention also relates to a method for fastening a rod or tube to an object, in the process of which the object is provided with a conically shaped opening in which a conically shaped bush is placed, inside of which the rod or tube is inserted, after which a force is exerted in an axial direction onto the conically shaped bush. This method is known and is used in a countless numbers of situations. Generally, the force in an axial direction is generated with the aid of additional parts, which makes the method inevitably relatively complex. The method according to the invention substantially obviates this disadvantage and is characterised in that an external thread, cut on a narrow end and/or a wide end of the conically shaped bush is screwed into an internal thread cut into a narrow end and/or a wide end of the conically shaped opening.

A favourable realisation of the inventive method with which the attachment of a rod or tube may be performed with little effort is characterised in that previously a slot, extending in a longitudinal direction, is made in the conically shaped bush.

The invention also relates to a system comprising a fastening means according to one of the claims 1 to 6 and an object provided with a conically shaped opening which may cooperate with this fastening means. Preferably, the conically shaped opening in the object is at least partly provided with an internal thread.

The invention will now be further explained with a reference to the following figures, in which:
- Fig. 1A: shows a possible embodiment of a conically shaped bush according to the invention in front view;
- Fig. 1B: shows an alternative embodiment of a conically shaped bush according to the invention front view;
- Fig. 1C: shows a further alternative embodiment of a conically shaped bush according to the invention in front view;
- Fig. 2: shows a possible embodiment of a fork construction;
- Fig. 3: shows a possible attachment of a pulley onto a shaft;
- Fig. 4A: shows a conically shaped bush with two mutually parallel flat surfaces in front view;
- Fig. 4B: shows this conically shaped bush in top view;
- Fig. 4C: shows an alternative conically shaped bush in top view;
- Fig. 4D: shows this conically shaped bush in top view.

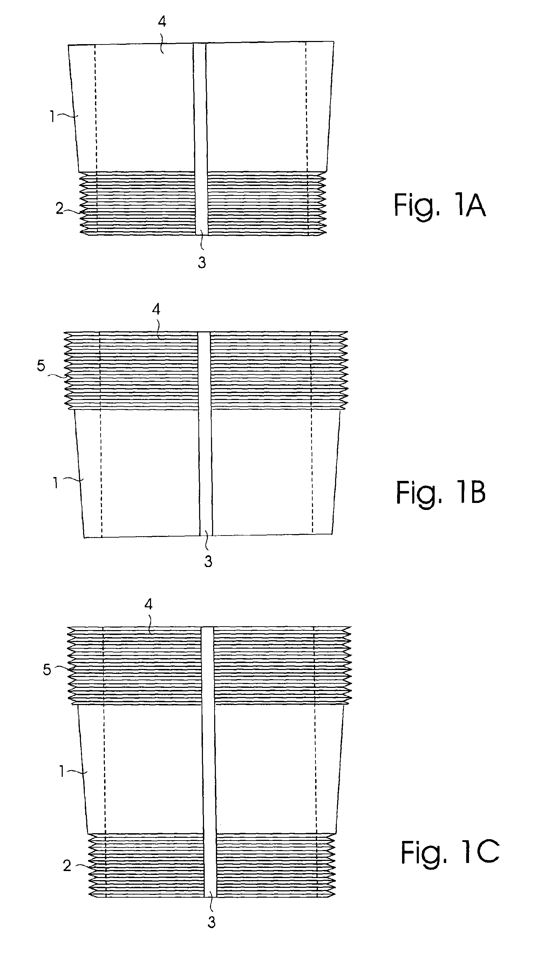

Fig. 1A shows a possible embodiment of a conically shaped bush 1 according to the invention in front view. On a narrow end, the conically shaped bush is provided with an external thread 2 and in a longitudinal direction it is provided with a slot 3 which may be entirely open, in the sense that it is bottomless, but if desired one may leave a layer of material in place. Conically shaped bush 1 may be screwed into a conically shaped opening, not shown here, which is on a narrow end provided with an internal thread which corresponds with external thread 2. While doing so, the width of slot 3 will decrease at some moment in time, and a rod, not shown here, slid into conically shaped bush 1, will be wedged. Conically shaped bush 1 may be manufactured of any material. When the conically shaped bush is manufactured of a material which is hardly resilient, like steel, the diameter of a drilling 4 and the diameter of the rod must be chosen so that the rod fits precisely into drilling 4 before conically shaped bush 1 is tightened.

Fig. 1B shows an alternative embodiment of a conically shaped bush according to the invention front view, where the conically shaped bush is provided with an external thread 5 on a wide end. Conically shaped bush 1 may be screwed into a conically shaped opening, not shown here, which is on a wide side provided with an external thread, which corresponds with thread 5. While doing so, the width of slot 3 will also decrease at some moment in time.

Fig. 1C shows a further alternative embodiment of a conically shaped bush according to the invention in front view, where the conically shaped bush is provided with an external thread 2 on the narrow side and with an external thread 5 on the wide side. Conically shaped bush 1 may be screwed into a conically shaped opening, not shown here, which is on a wide side and/or a narrow side provided with an internal thread which corresponds with thread 2 respectively thread 5. While doing so, the width of slot 3 will also decrease at some moment in time.

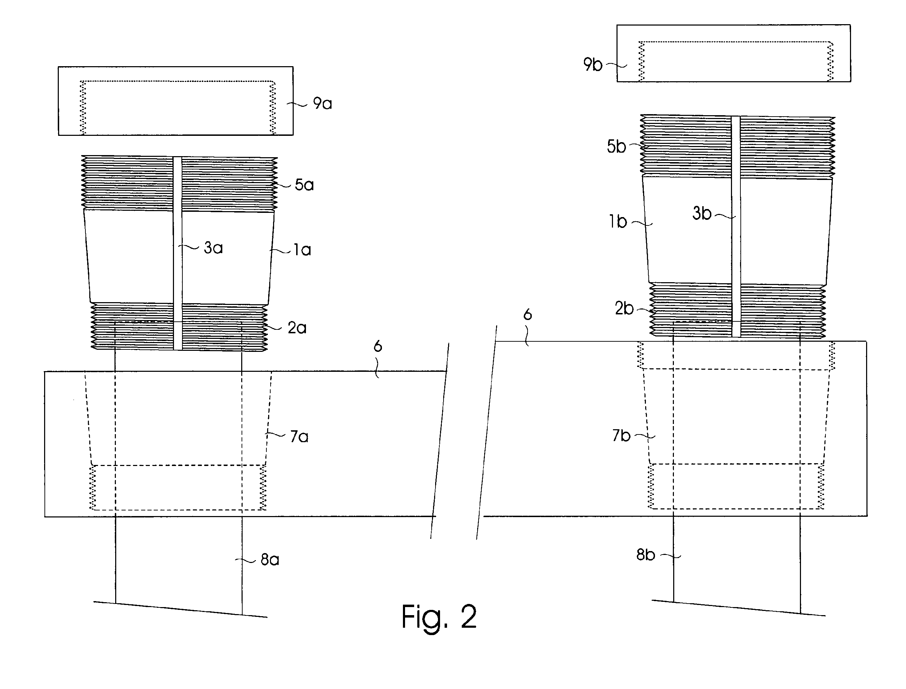

Fig. 2 shows a possible embodiment of a fork construction, consisting of a crown plate 6 into which two conically shaped holes 7a,7b have been made in which the narrow ends are provided with thread which may cooperate which threads 2a,2b on two conically shaped bushes 1a,1b. Two legs 8a,8b of the fork construction are placed inside holes 7a,7b, after which conically shaped bushes 1a,1b are installed and fastened. While doing so, slots 3a,3b will become smaller, so that legs 8a,8b will be secured into crown plate 6. In the embodiment shown here, conically shaped bushes 1a,1b are provided with threadings 5a,5b as well, onto which two caps 9a,9b can be screwed which provide for a tidy finishing and which moreover substantially completely seal the connection. In an alternative embodiment, also the top side of hole 7b is provided with an internal thread so that when conically shaped bush 1b is fastened, both the top side and the bottom side will be screwed into a matching thread, which may result in a better distribution of forces.

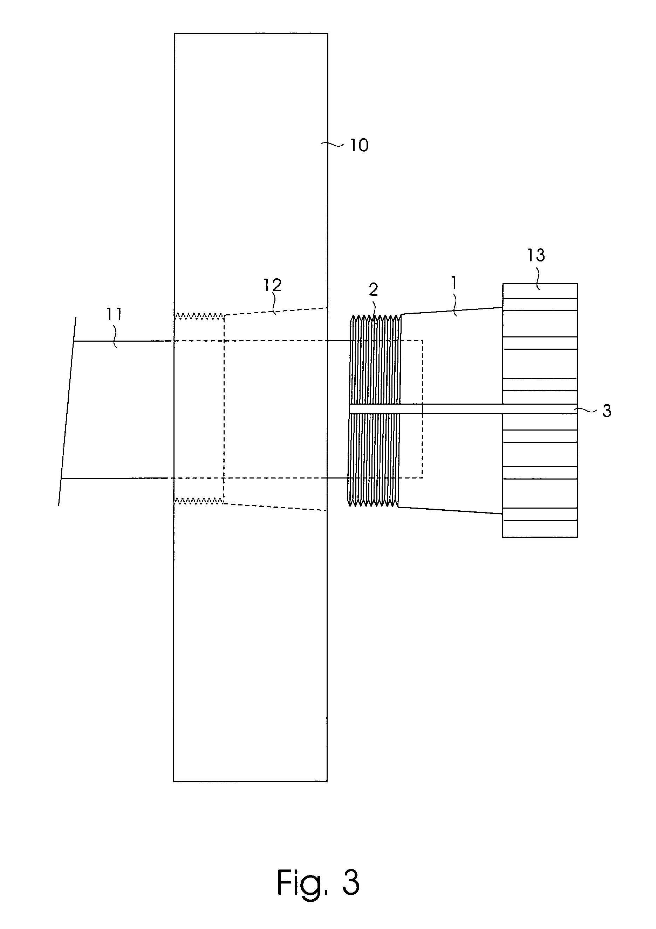

Fig. 3 shows a possible attachment of a pulley 10 onto a shaft 11. In pulley 10, a conically shaped drilling 12 is made, on a narrow end provided with a thread which may cooperate with thread 2 onto a conically shaped bush 1. Shaft 11 is placed inside drilling 12, after which conically shaped bush 1 is installed and fastened. While doing so, slot 3 will become smaller, so that shaft 11 is secured into pulley 10. A wide end of conically shaped bush 1 is provided with a milled edge 13, in order to simplify the fastening.

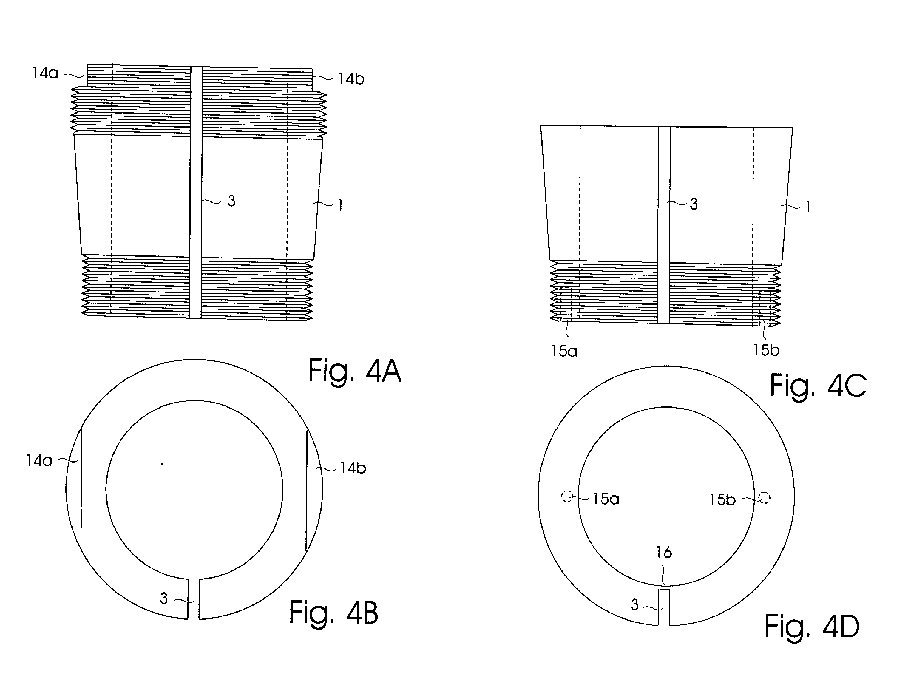

Fig. 4A shows a conically shaped bush 1 in front view, with a wide side onto which two mutually parallel flat surfaces 14a,14b have been made, as a result of which conically shaped bush 1 may be fastened with a wrench. Fig. 4B shows this conically shaped bush 1 in top view, met parallel surfaces 14a,14b. Fig. 4C shows an alternative conically shaped bush 1 in top view, where two holes 15a,15b have been drilled into the narrow side, into which two pins, attached to a wrench can be placed, after which the conically shaped bush may be fastened or loosened. Fig. 4D shows this conically shaped bush in top view, with holes 15a,15b. In the embodiment shown here, slot 3 does not completely transect the bush, which means that the functioning of the fastening means is partly founded upon the elasticity of thin wall 16 which is left in place.

## Claims

1. Fastening means for fastening a rod or tube onto an object, comprising a conically shaped bush with a wide end and a narrow end, which may be placed inside a conically shaped aperture in the object and in which the rod or tube may be inserted, **characterised in that** the conically shaped bush is provided with an external thread on its narrow end and/or its wide end.

2. Fastening means according to claim 1, **characterised in that** the conically shaped bush is provided with a slot, extending in a longitudinal direction.

3. Fastening means according to claim 2, **characterised in that** the slot traverses the entire thickness of the conically shaped bush.

4. Fastening means according to claim 1, **characterised in that** the wide end and/or the narrow end of the conically shaped bush is provided with two mutually parallel flat surfaces, extending parallel to a main axis of the conically shaped bush.

5. Fastening means according to claim 1, **characterised in that** the wide end and/or the narrow end of the conically shaped bush is provided with two mutually parallel holes, extending parallel to a main axis of the conically shaped bush.

6. Fastening means according to claim 1, **characterised in that** the wide end and/or the narrow end of the conically shaped bush is provided with a milled edge.

7. Method for fastening a rod or tube to an object, in the process of which the object is provided with a conically shaped opening in which a conically shaped bush is placed, inside of which the rod or tube is inserted, after which a force is exerted in an axial direction onto the conically shaped bush, **characterised in that** an external thread, cut on a narrow end and/or a wide end of the conically shaped bush is screwed into an internal thread cut into a narrow end and/or a wide end of the conically shaped opening.

8. Method according to claim 7, **characterised in that** previously a slot, extending in a longitudinal direction, is made in the conically shaped bush.

9. System comprising a fastening means according to one of the claims 1 to 6 and an object provided with a conically shaped opening which may cooperate with this fastening means.

10. System according to claim 9, **characterised in that** the conically shaped opening in the object is at least partly provided with an internal thread.
